# EUROPEAN PATENT APPLICATION

(11) **EP 2 620 942 A1**
(43) Date of publication of application: **31.07.2013**
(21) Application number: 13152426.6
(22) Date of filing: 23.01.2013
(51) Int. Cl.: G11B 5/17, G11B 5/31

(54) **Devices including shaped write coils**

(30) Priority: 25.01.2012 US 201213357701
(71) Applicant: Seagate Technology LLC, Cupertino CA 95014 (US)
(72) Inventor: Hutchinson, Erik Jon, Eden Prairie, MN Minnesota 55346 (US)
(74) Representative: Miller Sturt Kenyon

(57) **Abstract**

In certain embodiments, a head includes a write coil having multiple coil turns. A portion of the multiple coil turns are positioned near an air bearing surface and form a v- or u-shape.

In certain embodiments, a head includes a write coil having multiple coil turns. The coil turns closets to an air bearing surface are tapered.

## Description

### Summary

Certain embodiments of the present disclosure are generally directed to methods and devices including read/write heads with shaped write coils.

In certain embodiments, a head includes a write coil having multiple coil turns. A portion of the multiple coil turns are positioned near an air bearing surface and form a v- or u-shape.

In certain embodiments, a head includes a write coil having multiple coil turns. The coil turns closets to an air bearing surface are tapered.

### Brief Description of the Drawings

FIG. 1 provides a side view of a portion of a read/write head, in accordance with certain embodiments of the present disclosure.
FIG. 2 provides a view of a portion of a write coil, in accordance with certain embodiments of the present disclosure.
FIG. 3 provides a view of a portion of a write coil, in accordance with certain embodiments of the present disclosure.
FIG. 4 provides a view of a portion of a write coil, in accordance with certain embodiments of the present disclosure.
FIG. 5 provides a view of a portion of a write coil, in accordance with certain embodiments of the present disclosure.
FIG. 6 provides a graph of protrusion profiles, in accordance with certain embodiments of the present disclosure.

### Detailed Description

The present disclosure relates to devices, systems, and methods including write coils for read/write heads. By adjusting a write coil's shape, a protrusion profile of a read/write head's media-facing surface can be adjusted.

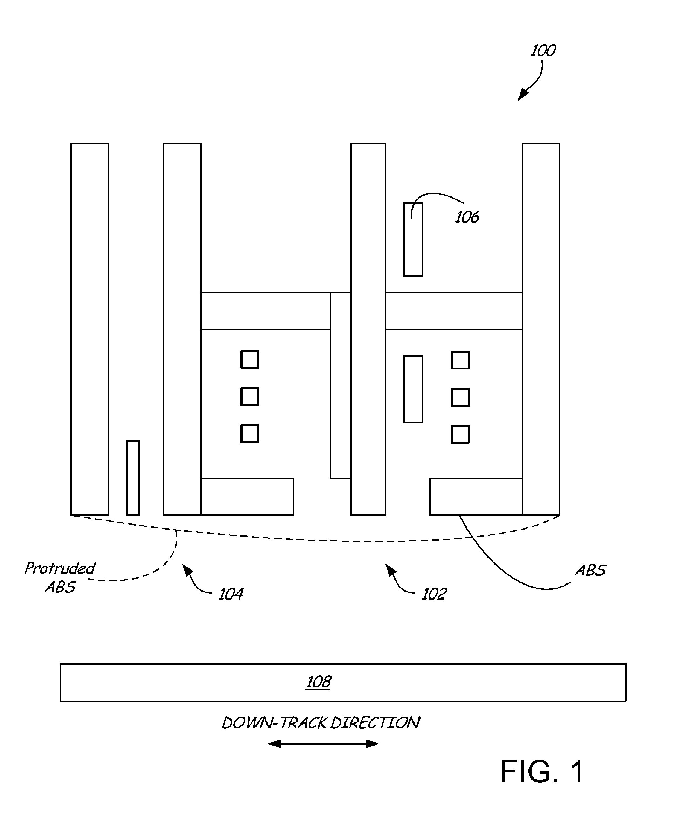

During operation of a data storage device, read/write heads are positioned in close proximity to recording media to read and write data to the media. To control a distance between a head's reader or writer and the media, heads can include one or more heating circuits to induce thermal protrusion. FIG. 1 shows a read/write head 100 having a writer portion 102 and a reader portion 104. The writer portion 102 includes a writer and a coil or set of coils positioned around and/or near the writer. The coil or coils can be planar (as shown) or helical (sometimes called pancake coils), where the coil wraps around a back via. A heating circuit 106 is positioned near the writer portion 102. When current is passed through the heating circuit 106, the circuit 106 provides localized heat to induce thermal protrusion at an air bearing surface (ABS). An example of thermal protrusion along a down-track direction is shown as a dotted line in FIG. 1, protruding towards recording media 108.

When using a heating element, the protrusion shape or profile is dependent on surrounding large volume shapes, such as write coils, which can be made with material having a high coefficient of thermal expansion, such as copper. Write coils' shapes impact the protrusion shape when write coils are heated by a heating element or by passing current through the write coils. Certain embodiments of the present disclosure are accordingly directed to systems, devices, and methods for shaping write coils to control protrusion shapes and the resulting contact area between a read/write transducer and the media.

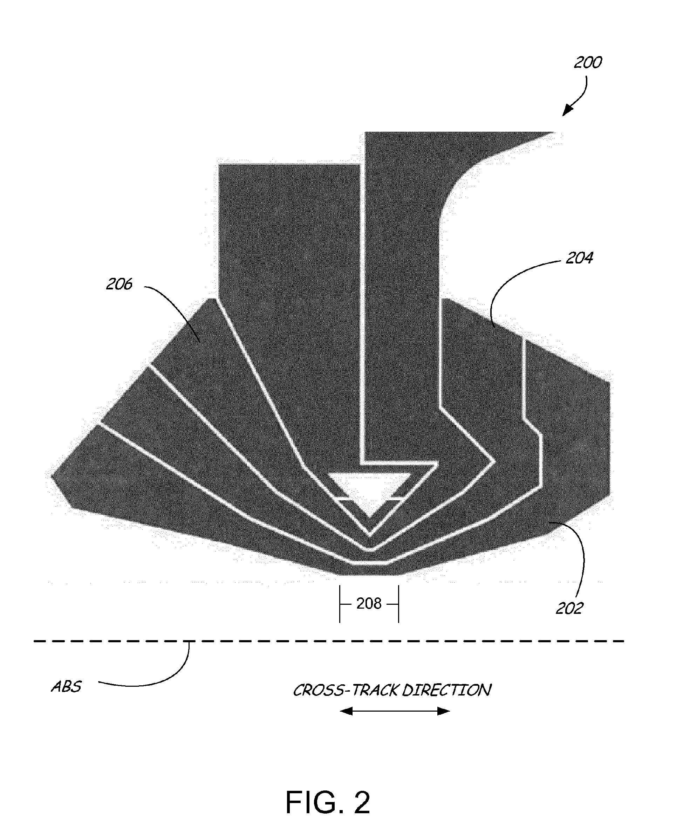

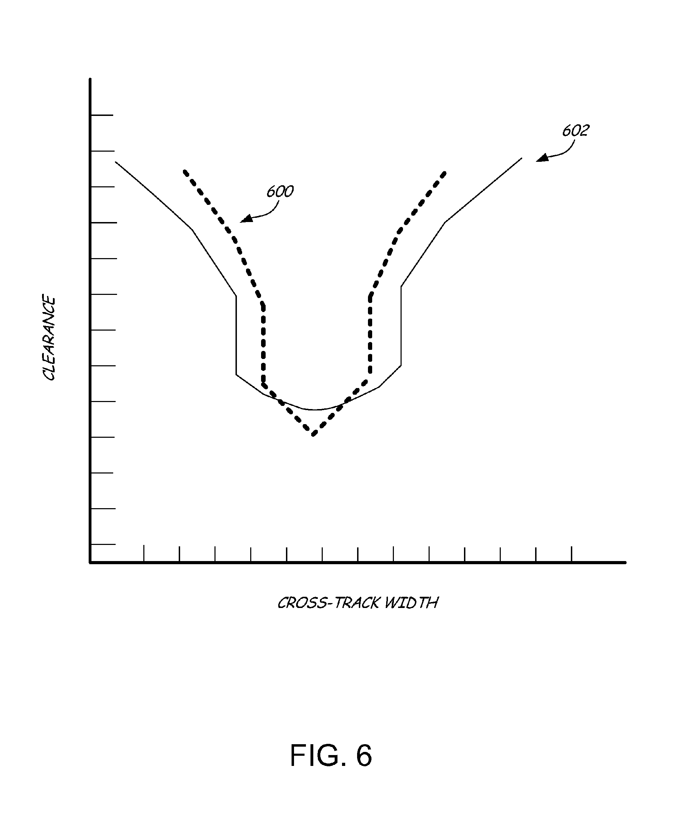

FIG. 2 shows a portion of a helical write coil 200 having multiple coils turns 202-206. Coil turn 202 is positioned closest to an air bearing surface (ABS) and is followed by coil turns 204 and 206. The coil turns 202-206 are tapered to form a v-shape, which provides a narrow protrusion shape. As shown in FIG. 2, the coil turns 202-206 become thinner as the coil gets closer to the ABS. Coil turn 202 includes a flat section 208 near the ABS. Adjusting a shape of the write coil 200 and its coil turns 202-206 can widen or narrow a protrusion shape in a cross-track direction. For example, adjusting the flat section's width will adjust a width of the protrusion in the cross-track direction. The wider the flat section 208, the wider the protrusion and resulting contact area between a read/write head and recording medium. Therefore, the protrusion shape can be tuned to be narrow, like the protrusion profile 600 shown in FIG. 6- representing a protrusion shape induced from a write coil design similar to write coil 200 of FIG. 2. Although the above description refers to a single write coil being used, a similar protrusion shape can be obtained by using multiple write coils. For example, instead of using a write coil having three coil turns, three individual write coils could be used.

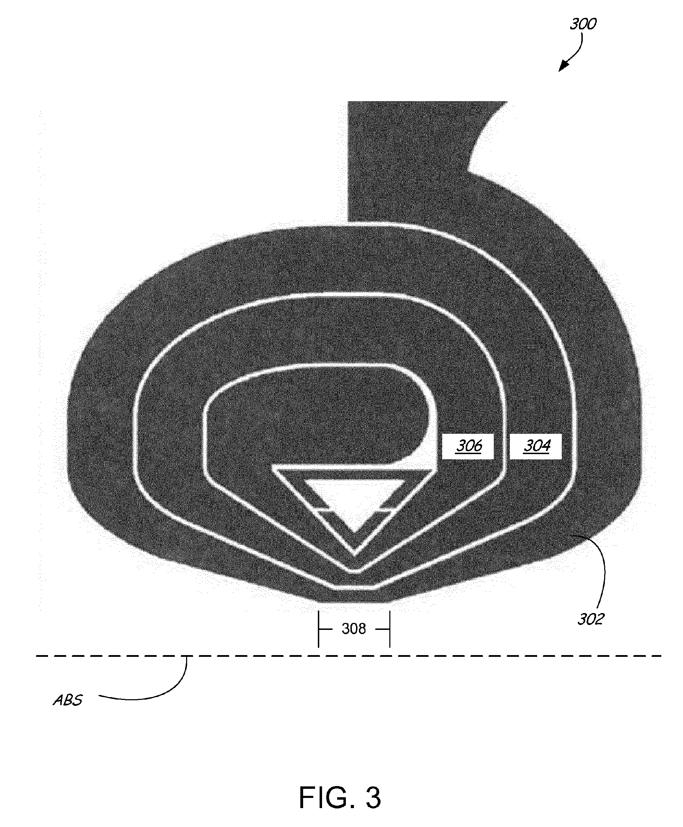

FIG. 3 shows a portion of a planar write coil 300 having multiple coil turns 302-306. Coil turn 302 is positioned closest to the ABS and is followed by coil turns 304 and 306. The coil turns are tapered near the ABS to form a v-shape, which provides a narrow protrusion shape. As shown in FIG. 3, the coil turns 302-306 become thinner as the coil gets closer to the ABS. Coil turn 302 includes a flat section 308 near the ABS. Adjusting a shape of the write coil 300 and its coil turns 302-306 can widen or narrow a protrusion shape in a cross-track direction. For example, adjusting the flat section's width will adjust a width of the protrusion in the cross-track direction. Although the above description refers to a single write coil being used, a similar protrusion shape can be obtained by using multiple write coils. For example, instead of using a write coil having three coil turns, three individual write coils could be used.

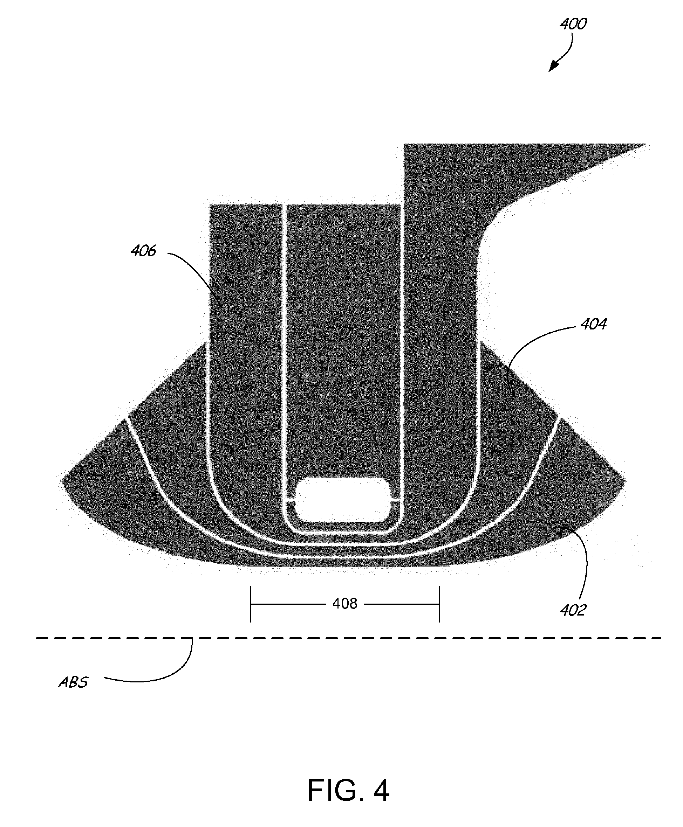

FIG. 4 shows a portion of a helical write coil 400 having multiple coil turns 402-406. Coil turn 402 is positioned closest to the ABS and is followed by coil turns 404 and 406. The coil turns are tapered near the ABS to form a u-shape, which provides a broad protrusion shape. Coil turn 402 includes a flat section 408 near the ABS. The longer flat section 408 of FIG. 4 induces a broad profile, thereby widening a protrusion shape in the cross-direction. The wider shape provides additional contact area between a read/write head and recording medium. FIG. 6 shows a protrusion profile 602 induced from a write coil design similar to write coil 400 of FIG. 4. Although the above description refers to a single write coil being used, a similar protrusion shape can be obtained by using multiple write coils. For example, instead of using a write coil having three coil turns, three individual write coils could be used.

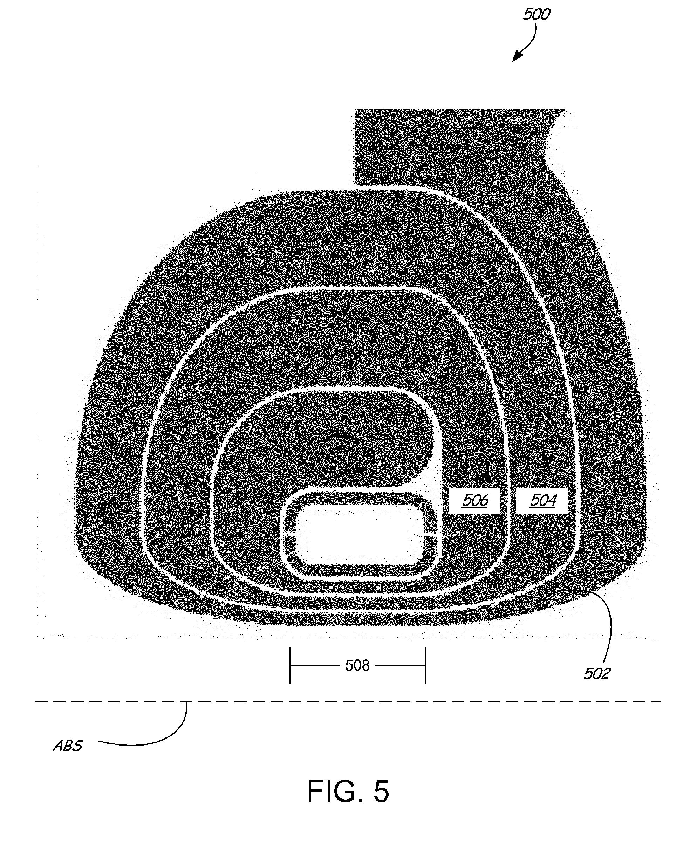

FIG. 5 shows a portion of a planar write coil 500 having multiple coil turns 502-506. The coil turns are tapered near the ABS to form a u-shape, which provides a broad protrusion shape. Coil turn 502 includes a flat section 508 near the ABS. The longer flat section 508 of FIG. 5 induces a broad profile, thereby widening a protrusion shape in the cross-track direction. The wider shape provides additional contact area between a read/write head and recording medium. Although the above description refers to a single write coil being used, a similar protrusion shape can be obtained by using multiple write coils. For example, instead of using a write coil having three coil turns, three individual write coils could be used.

FIG. 6 provides a graph showing exemplary profiles 600, 602 of protrusion shapes induced by different write coil designs. Profile 600 represents a cross-track protrusion shape induced from a write coil design similar to that shown in FIG. 2. Profile 600 has a sharper and narrower protrusion shape than profile 602, representing a cross-track protrusion shape induced from a write coil design similar to that shown in FIG. 4. Similar protrusion shapes can be observed for the planar coil designs, respectively.

It is to be understood that even though numerous characteristics and advantages of various embodiments of the present invention have been set forth in the foregoing description, together with details of the structure and function of various embodiments of the invention, this detailed description is illustrative only, and changes may be made in detail, especially in matters of structure and arrangements of parts within the principles of the present invention to the full extent indicated by the broad general meaning of the terms in which the appended claims are expressed.

## Claims

1. A head (100) comprising:
a write coil (200, 300) having multiple coil turns (202-206, 302-306), wherein a portion (202, 302) of the multiple coil turns are positioned near an air bearing surface (ABS) and form a v-shape.

2. The head of claim 1, wherein the write coil (200) is a helical coil configuration.

3. The head of claim 1, wherein the write coil (300) is a planar coil configuration.

4. The head of any one of the preceding claims, wherein the write coil is positioned near a writer (102).

5. The head of any one of the preceding claims, wherein the write coil is positioned near a reader (104).

6. The head of any one of the preceding claims, wherein a coil turn closest to the air bearing surface has a flat section (208, 308) adjacent the air bearing surface.

7. The head of any one of the preceding claims, wherein the write coil is tapered to for the v-shape.

8. The head of any one of the preceding claims, wherein the v-shape induces a narrow protrusion profile.

9. A head (100) comprising:
a write coil (500) having multiple coil turns (502-506) in a planar coil configuration, wherein a portion of the multiple coil turns (506) are positioned near an air bearing surface (ABS) and form a u-shape.

10. The head of claim 9, wherein a coil turn closest to the air bearing surface has a flat section (508) adjacent the air bearing surface.
